(19) Europäisches Patentamt
European Patent Office
Office européen des brevets

(11) **EP 1 376 397 A2**

(12) **EUROPEAN PATENT APPLICATION**

(43) Date of publication:
**02.01.2004 Bulletin 2004/01**

(51) Int Cl.7: **G06F 17/30**

(21) Application number: **02019152.4**

(22) Date of filing: **30.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **21.06.2002 JP 2002181135**

(71) Applicant: **Hitachi, Ltd.**
**Chiyoda-ku, Tokyo 101-8010 (JP)**

(72) Inventors:
• **Shintani, Takahiko, Hitachi, Ltd., Int. Prop. Gp.**
**Chiyoda-ku, Tokyo 100-8220 (JP)**

• **Mitsuyama, Satoshi, Hitachi, Ltd., Int. Prop. Gp.**
**Chiyoda-ku, Tokyo 100-8220 (JP)**
• **Ban, Hideyuki, Hitachi, Ltd., Int. Prop. Gp.**
**Chiyoda-ku, Tokyo 100-8220 (JP)**
• **Hashiguchi, Takeshi, Hitachi, Ltd., Int. Prop. Gp.**
**Chiyoda-ku, Tokyo 100-8220 (JP)**

(74) Representative: **Beetz & Partner Patentanwälte**
**Steinsdorfstrasse 10**
**80538 München (DE)**

(54) **Method of extracting item patterns across a plurality of databases, a network system and a processing apparatus**

(57) The invention relates to an item pattern straddling over two or more databases with different structure and/or attributes is extracted from the databases based on a comparison of partial data. The support count for the item pattern is counted by communicating a list of identifiers for records, the number of the identifiers, or a subset of the item pattern between the databases. For an item pattern with a known support count, an upper-bound value of the support counts for subsets of that item pattern is calculated on the basis of a difference in the support counts for the subsets, thereby limiting the item patterns for which the support counts are to be counted.

FIG.2

EP 1 376 397 A2

**Description**

BACKGROUND OF THE INVENTION

1. Technical Field

The present invention relates to a data analysis method and system to be applied to a database and a data warehouse, and more particularly to data mining for clarifying an association among data in records contained in a database by analyzing the records.

2. Background Art

A technique called data mining is known whereby a huge amount of data is analyzed to find out hidden patterns or relationships based on which useful information can be extracted. For instance, consider data mining as applied to basket data in a supermarket. A supermarket is stocked with steps of items (goods or merchandize items), and individual customers purchase their substeps. The combination of items purchased by a customer is recorded as basket data. When many pieces of basket data are to be analyzed, it is desirable to extract significant purchase patterns, i.e., common patterns recurring among a plurality of customers. Such patterns are called frequent patterns (large itemsets). If a frequent pattern is extracted which indicates: "Product A is often purchased together with Product B," one can see that there is a association in the sales of Products A and B, and this information can be utilized when deciding on sales policies such as the product placement, selection of bargain goods, and pricing.

The study on how to extract frequent patterns has been going on in the field of data mining. Examples include: (1) A method called "Apriori" by R. Agrawal and R. Srikant, *Fast algorithms for mining association rules,* Proceedings of the 20th VLDB Conference, 1994, pp. 487-499 (Japanese Patent Application Laid-Open (Kokai) No. 8-287106, U. S. Patent No. 5,794,209) (Reference 1); and (2) J. Han, J. Pei, Y. Yin, *Mining frequent patterns without candidate generation,* Proceedings of ACM SIGMOD International Conference on Management of Data, 2000, pp. 1-12 (Reference 2). The methods known from References 1 and 2 involve extraction, from a database consisting of sets of records containing a plurality of binary attributes, combinations of attribute values exceeding a predetermined level of support set by a user or a minimum value of support count (minimum support, or minimum support count). In each record, an attribute whose attribute value is true is referred to as an item. Support refers to the ratio of records in the entire database containing combinations of items. Support count refers to the number of such records. A combination of items that are extracted by the above methods and which exceed a minimum value support or support count is called a frequent pattern (large itemset). In the methods of References 1 and 2, a single database, or a plurality of databases which are integrated into a single database by record identifiers, is analyzed.

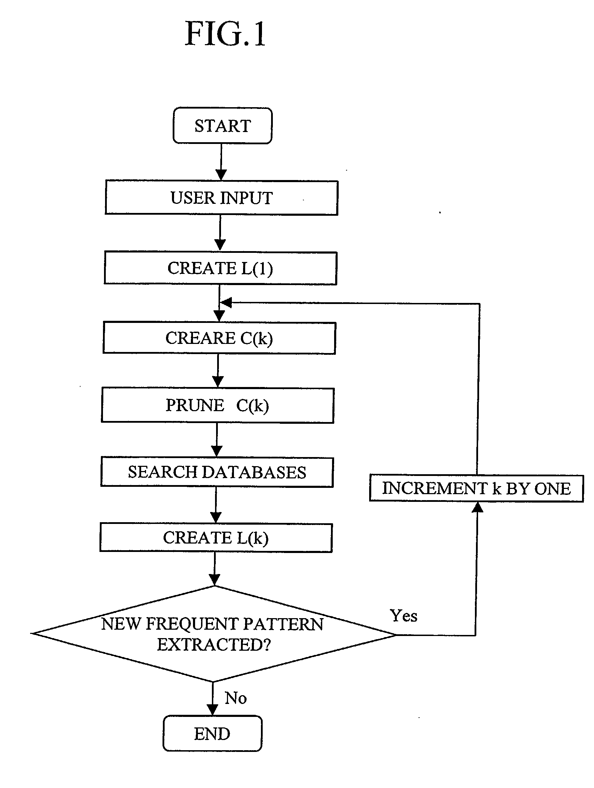

The procedure of extracting frequent patterns by the Apriori method known from Reference 1 will be described by referring to the flowchart shown in Fig. 1. In the first step of user input, the user inputs a minimum level of support or a minimum support count. In the next step of L(1) generation, records in the database are picked out, and the number of counts (support count) is incremented for each item appearing in the record. When the counting-up is complete for the entire records, those items whose final tally is more than the minimum support count are picked out. In the following description, L(k) refers to a frequent pattern with a number of items k, and C(k) refers to a candidate pattern with a number of items k. The frequent pattern L(k) is a combination of items whose frequency of appearance in the database exceeds the minimum support count, and the candidate pattern is a candidate combination for that combination. In the next step of C(k) generation, candidate patterns are created based on a frequent pattern with item numbers k-1. Specifically, patterns with a number (k-2) of common items in the pattern L(k-1) are joined to thereby extract patterns consisting of k items. In the initial state, k=2, and C(2) is produced on the basis of L1. In the next step of pruning C(k), the candidate patterns in C(k) that include patterns that are not included in L(k-1) are removed. After C(k) pruning, the step of producing L(k) is performed. Specifically, the records in the database are read, and the count for each candidate pattern in C(k) present in the records is incremented, so that eventually only those candidate patterns are left that exceed the minimum support count. If no pattern was produced in the L(k) creation step that can be an element of L(k), the procedure is terminated. If there was even one such pattern, the value of k is incremented by one and the procedure goes back to C(k) generation. References 1 and 2 also mention methods of creating association rules based on the individual frequent patterns of L(k). In these methods, for each frequent pattern of L(k), an association rule is created based on subsets of item patterns contained in the frequent pattern.

Examples of the method of extracting frequent patterns from a plurality of databases are known from: (1) J. S. Park, M. Chen, P. S. Yu, *Efficient parallel data mining for association rules,* Proceedings of International Conference on Information and Knowledge Management, 1995, pp.31-36 (Reference 3); (2) R. Agrawal, J. Shafer, *Parallel mining of association rules,* IEEE Transactions on Knowledge and Data Engineering, 1996, pp.962-969 (Reference 4); and (3) Japanese Patent Application Laid-Open (Kokai) No. 2001-167098: Method of distributed parallel processing of bulk data (Reference 5).

While the methods of References 3 to 5 involve the extraction of frequent patterns from a plurality of databases, the individual databases to be analyzed have identical attributes. The records of all of the databases have identical attributes, and each record is assumed to be retained in a single database. No consideration was given to the case of retaining a record in a plurality of databases.

In some cases, the database to be analyzed consists of more than one portions, each partial database having a different database structure and attribute. Further, there are cases where the divided databases may not be integrated for reasons of preventing information leak. For example, in the field of medicine, personal data and gene data are managed separately so that individuals cannot be identified based on the genetic information. No database may be created that contains both personal data and gene data at the same time. Gene data yield useful information when analyzed together with case data. By extracting item patterns from case data and gene data as the objects of analysis, the relationship between a gene and the efficacy of a drug can be known. For example, if an item pattern is extracted that indicates "Many patients having a gene A of type Y have had allergic reactions to drug C," the determination as to whether drug C is to be prescribed can be facilitated by examining the type of gene A of the patient, so that individual patients can receive appropriate treatment. Case data includes information that is highly beneficial in identifying individuals, such as examination values and symptoms. Accordingly, there is a need to avoid integrating databases during the analysis of case data and gene data as well. Yet, the conventional methods have not taken into consideration data analysis without database integration.

Thus, in the conventional methods, in the case where a single record is divided and held in a plurality of databases which are not allowed to be integrated, no consideration has been given to the possibility of extracting item patterns while avoiding the leakage of information for integrating the databases.

It is therefore a first object of the present invention to provide a method and system for allowing item patterns straddling across a plurality of databases with different attributes to be extracted by exchanging partial information from the data. Another object of the present invention is to provide a method of reducing the number of candidate patterns which are combinations of data to be searched for extracting item patterns.

## SUMMARY OF THE INVENTION

One of the features of the pattern extraction method according to the present invention is that, in databases including a set of records having one or more attributes, each database has a different attribute and the records included in the individual databases can be associated between the databases by an identifier

A record consists of a union of sets of items of records that are contained in the different databases and which are associated with the same identifier, wherein an item pattern consisting of a combination of items included in the different databases that satisfies a minimum value of a user-specified support count is extracted by a process of transmitting subsets of the item pattern, transmitting a list of identifiers for the records, or transmitting the number of records that correspond with the received record identifier, between the databases.

Another feature of the present invention is that candidate patterns for which support counts are counted up are limited by calculating an upper-bound value of the support count for partial patterns of an item pattern which is a combination of items with known support counts.

Namely, the method of extracting an item pattern existing across two or more databases that are individually managed by a plurality of processing units, wherein an item is a pair of an attribute and an attribute value in the databases, and an item pattern is a combination of items, comprises:

a first step of concentrating item patterns extracted from the databases managed by the plurality of processing units onto a pattern extraction unit;
a second step of creating, in the pattern extraction unit, a joined item pattern comprising a first item pattern extracted from a first database and a second item pattern extracted from a second database, wherein a first processing unit managing the first database is notified of the first item pattern and a second processing unit managing the second database is notified of the second item pattern;
a third step of concentrating, from the first and second processing units onto a tally processing unit which is different from the pattern extraction unit, a list of identifiers for records in the first database including the first item pattern and a list of identifiers for records in the second database including the second item pattern; and/or
a fourth step of counting, in the tally processing unit, the number of identifiers that are common to all of the concentrated identifier lists, the number being transmitted to the pattern extraction unit.

By this method, when a union of sets of items having the same identifier in a plurality of databases is considered a single integrated record, the support count or the number of integrated records that include a joined item pattern existing over the plurality of databases can be counted up without revealing the association between the integrated record and its identifier to any of the plurality of processing units, the pattern extraction unit, or the tally processing unit. The attribute value is preferably a discreet value or a value that can be associated with a discreet value.

One or both of the pattern extraction unit and tally processing unit may be doubled by the processing units.

When the minimum value of the support count or the number of records including the item pattern is designated by the user input, for example, in the first step, the plurality of processing units extract item patterns with support counts being not less than the specified minimum support count;

in the second step, the pattern extraction unit creates joined item patterns with unknown support counts; and/or

in the fourth step, the pattern extraction unit selects a joined item pattern for which the support count is not less than the minimum support count, by referring to the number transmitted from the tally processing unit.

When the minimum support count is specified, the method preferably further comprises the steps of:

the pattern extraction unit calculating an upper-bound value of the support count for an item pattern with unknown support count which is a subset of items in a joined item pattern with known support count, on the basis of the support count for the joined item patern and a known support count for an item pattern which is a subset of the joined item pattern; and/or

the pattern extraction unit deleting a joined item pattern for which the calculated upper-bound value of the support count is less than the minimum support count from candidates for the joined item pattern created in the second step.

An upper-bound value Upper (X' (1)X' (2)...X' (m)) of the support count for an item pattern X'(1)X2(2)...X'(m) consisting of a subset of a joined item pattern X(1)X(2)...X(m) is calculated according to the following equation:

$$
\begin{aligned}
&Upper(X'(1)X'(2)...X'(m)) \\
&= S(X(1)X(2)...X(m)) \\
&+ \min\{S(X'(i)) - S(X(i)) \mid X'(i) \subseteq X(i), i = 1,2,...,m\} \quad\quad (1) \\
&+ \sum_{i=1}^{m} \min\{S(X(i)) - S(X), S(X'(j)) - S(X(j)) \mid i \neq j, X'(j) \subseteq X(j), j = 1,2,...,m\}
\end{aligned}
$$

wherein m (an integer of 2 or more) is the number of databases, X(i) is an item pattern consisting of items contained in an i-th database, X'(i) is an item pattern consisting of a subset of items in the item pattern X(i), and S(X) is the support count for an item pattern X.

When the support count for the item pattern X(1)X(2)...X(m) is known, the upper-bound value of the support count for the item pattern X'(1)X'(2)...X'(m) is calculated from the sum of the support count for the item pattern X(1)X (2)...X(m) and the number of records that does not include the item pattern X(1)X(2)...X(m) but that may include the item pattern X'(1)X'(2)...X'(m). The records include: (1) In an i-th database, those records included in X'(i) but not in X (i); and (2) Those records that have different values of i and j, that are not included in X(1)X(2)...X(m), that are included in X(i), and that, in a j-th database, are not included in X(j) but included in X'(j).

By eliminating, from the candidates for the joined item pattern that is created in the joined item pattern creating unit, the joined item pattern with an upper-value of the support count, which is calculated in the support count upper-bound value calculating unit, that is less than the user-specified minimum support count, the amount of processing required for analysis can be reduced.

In the second step, the pattern extraction unit may notify the first and second processing units of the position of the tally processing unit.

The method may further comprise the steps of:

creating an association rule such that a partial pattern of the joined item pattern forms a assumption and the remaining pattern of the joined item pattern form a conclusion; and/or

calculating the confidence of the association rule by dividing the support count for the joined pattern by the support count for the partial pattern (the support count for the joined pattern÷the support count for the partial pattern).

In another aspect of the present invention, a network system is provided which comprises a plurality of data processing apparatuses, a pattern extraction processing apparatus and a tally processing apparatus interconnected by a network, the system having a function of extracting an item pattern straddling over two or more databases that are managed individually by the plurality of processing apparatuses, wherein an item is a pair of an attribute and an attribute value in the databases, and an item pattern is a combination of items, wherein:

the data processing apparatus comprises an item pattern extraction unit for extracting a pair of an item pattern and an identifier for a record satisfying the item pattern from the individually managed databases, transmits the item pattern extracted in the item pattern extraction unit to the pattern extraction processing apparatus, and transmits a list of identifiers for records including those item patterns of the transmitted item patterns that were specified by the pattern extraction processing apparatus to a specified tally processing apparatus.

Further the pattern extraction processing apparatus comprises an item pattern memory unit for storing the item patterns received from the plurality of data processing apparatus, and a joined item pattern creating unit for creating a joined item pattern by joining item patterns received from different data processing apparatus while referring to the item patterns stored in the item pattern memory unit, wherein the pattern extraction processing apparatus transmits an item pattern which is a constituent element of the joined item pattern created in the joined item pattern creating unit, and the position of the tally processing apparatus to the data processing apparatus from which the item pattern was derived, and counts the value received from the tally processing apparatus as the support count for the joined item pattern.

Still further the tally processing apparatus comprises a common identifier counter unit for counting the number of identifiers that are common to all of the recovered lists of identifiers, wherein the tally processing apparatus transmits the value counted by the common identifier counter unit to the pattern extraction processing apparatus. The pattern extraction processing apparatus and/or the tally processing apparatus may be doubled by the data processing apparatus.

In yet another aspect of the present invention, there is provided a processing apparatus for performing part of the process of extracting an item pattern straddling over two or more databases managed individually by a plurality of processing units, wherein an item is a pair of an attribute and an attribute value in the databases, and an item pattern is a combination of items, the processing apparatus comprising:

an item pattern memory unit for storing item patterns sent from the plurality of processing units; and/or

a joined item pattern creating unit for creating a joined item pattern comprising the combination of a first item pattern sent from a first processing unit and a second item pattern sent from a second processing unit, by referring to the item patterns stored in the item pattern memory unit.

Furthermore it can comprise a support count counter unit which transmits the first item pattern and the position of the tally processing unit to the first processing unit, transmits the second item pattern and the position of the tally processing unit to the second processing unit, prompts the first processing unit to transmit an identifier list of records including the first item pattern, prompts the second processing unit to transmit an identifier list of records including the second item pattern, and counts the value received from the tally processing unit as the support count for the joined item pattern. The processing apparatus preferably further comprises a support count upper-bound value counter unit for calculating an upper-bound value Upper $(X'(1)X'(2)...X'(m))$ of the support count for an item pattern $X'(1)X'(2)...X'(m)$ consisting of a subset of the joined item pattern, according to equation (1), wherein m (an integer of 2 or more) is the number of the databases, $X(i)$ is an item pattern consisting of items included in an i-th database, $X'(i)$ is an item pattern consisting of a subset of items in the item pattern $X(i)$, $X(1)X(2)...X(m)$ is a joined item pattern with a known support count, and $S(X)$ is the support count for the item pattern $(X)$.

In a further aspect of the present invention, a processing apparatus is provided for performing part of the process of extracting an item pattern straddling over two or more databases that are individually managed by a plurality of processing units, wherein an item is a pair of an attribute and an attribute value in the databases, and an item pattern is a combination of items, the processing apparatus comprising a frequent pattern extraction unit for extracting from the managed database item patterns with support counts that are not less than a specified support count and an identifier list of records including the item pattern, wherein the item patterns extracted in the frequent pattern extraction unit are transmitted to a pattern extraction apparatus, and an identifier list corresponding to an item pattern specified by the pattern extraction apparatus is transmitted from the pattern extraction apparatus to a specified tally processing apparatus. The processing apparatus may be designated by the pattern extraction apparatus as the tally processing apparatus, in which case the apparatus comprises a common identifier counter unit for counting the number of identifiers common to all of the identifier lists that have been received, wherein the value counted by the common identifier counter unit is transmitted to the pattern extraction processing apparatus.

BRIEF DESCRIPTION OF THE DRAWINGS

Fig. 1 shows a flowchart schematically illustrating the Apriori method.
Fig. 2 shows a system according to a first embodiment of the present invention.
Fig. 3 shows a flowchart schematically illustrating the process of extracting a frequent pattern according to the present invention.

Fig. 4 shows a flowchart of the process of extracting a local frequent pattern.

Fig. 5 shows a flowchart of the process of counting a support count of a candidate pattern.

Fig. 6 shows a flowchart of the process of creating an association rule.

Fig. 7 shows an example of databases to be analyzed in the present invention.

Fig. 8 shows an example of the results of extraction of local frequent patterns in the present invention.

Fig. 9 shows a flowchart of the process of creating a candidate pattern in the present invention.

Fig. 10 shows a system according to a second embodiment of the present invention.

Fig. 11 shows a system according to a third embodiment of the present invention.

Fig. 12 shows a system according to a fourth embodiment of the present invention.

Fig. 13 shows an example of a database to be analyzed in the present invention.

Fig. 14 shows an example of the results of extraction of local frequent patterns in the present invention.

DETAILED DESCRIPTION OF PREFERRED EMBODIMENTS

Embodiments of the present invention will be hereafter described by referring to the drawings, in like reference numerals identify similar or identical elements throughout the several views.

First, the terms used in describing the embodiments will be defined. A database is made up of attributes having attribute values that can be associated with discrete values or discrete values. A pair of attribute and attribute value is called an item. When an attribute value is a continuous value, the attribute value can be divided into separate divisions and a specific discreet value can be assigned to each division, thereby associating the continuous value with discreet values. It is also possible to classify the discreet values into groups and associate each group with a specific discreet value, so that each group is associated with a discreet value that is not included in the attribute values.

A database is a set of records each of which is a list of items. The records contained in each database have an identifier allowing the records to be associated with each other between the databases. Records which are held in different databases and that have an identical identifier are treated as a single record, i.e., they are considered as parts of a single record held in a plurality of databases.

A combination of items is called an item pattern. When the items existing in an item pattern X form a subset of a record, the record is expressed as containing the item pattern X. If all of the items existing in an item pattern X are included in a union of sets of items contained in records in two or more databases with an identical identifier, the item pattern X is also said to be contained in the records. The number of records that contain the item pattern X is called a support count, and the ratio of a support count to the total number of records included in a database is called a support. Because support can be calculated from a support count, support and support count can be treated in the same manner. Further, if all of the items existing in an item pattern X exist in another item pattern Y, the item pattern Y is said to include the item pattern X, with the item pattern X being called a partial pattern of the item pattern Y which in turn is called an upper-level pattern of the item pattern X.

An association rule is expressed by if[X] then [Y], in which X and Y are item patterns which include no common items. X is called an assumption and Y a conclusion. An association rule generally has evaluation values of support and confidence. Support level indicates the degree to which an association rule is applied, so that the support for an association rule if[X] then [Y] is the support for a product set of the item patterns X and Y. Confidence refers to the ratio of data satisfying an assumption simultaneously satisfying a conclusion (i.e., the probability of the conclusion being the case when the assumption is the case). The confidence of an association rule if[X] then [Y] is a quotient when the support for the product set of the item patterns X and Y is divided by the support for the item pattern X.

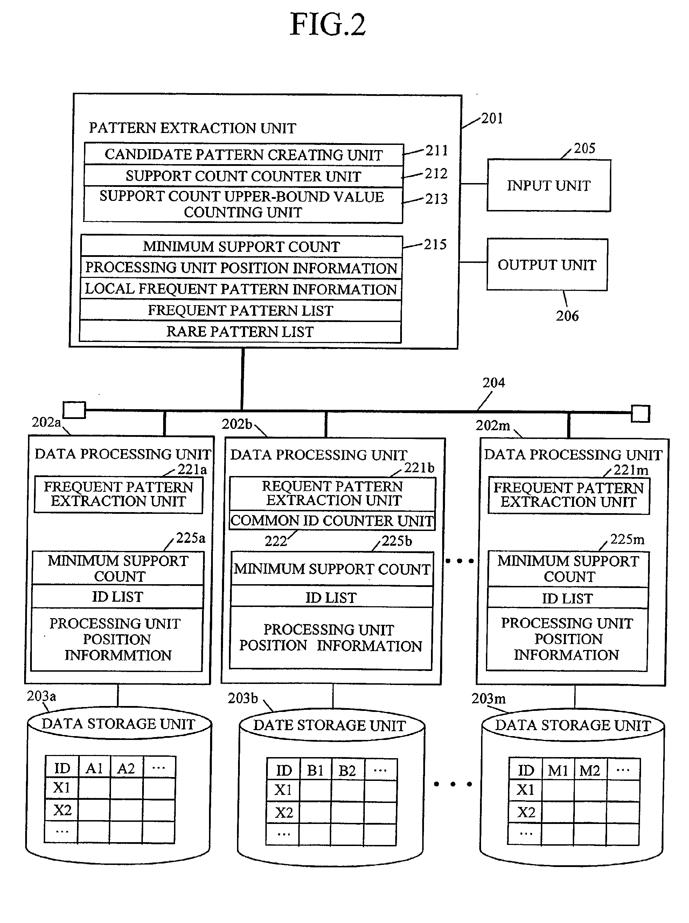

Fig. 2 shows an example of the system structure of a first embodiment of the present invention. This system consists of a pattern extraction unit 201 and a plurality of data processing units 202a, 202b, ..., and 202m. The pattern extraction unit and the data processing units are each made of a computer and interconnected by a communication path 204. Data to be analyzed are stored in data storage units 203a, 203b, ..., and 203m connected to the data processing units 202a, 202b, ..., and 202m, respectively.

The pattern extraction unit 201 includes a candidate pattern creating unit 211, a support number counter unit 212, and a support-number upper-bound value calculation unit 213. The pattern extraction unit 201 also includes a memory unit 215 in which to store the value of the minimum support count, a list of frequent patterns, a list of rare patterns, and information about the position of each data processing unit on the network, in the form of data or files. The pattern extraction unit 201 is connected to an input unit 205 including a keyboard and mouse, and an output unit 206 including a display and a printer. The data processing units 202a, 202b, ..., and 202m include a frequent pattern extraction units 221a, 221b, ..., and 221m, respectively, and further include memory units 225a, 225b, ..., and 225m, respectively, for storing the minimum support count transmitted from the pattern processing unit 201, an ID list to be described later, and information about the position of a tallying data processing unit, which will be described later, on the network. One of the data processing units has a common ID counter unit 222, which will be described later.

The data storage units 203a, 203b, ..., and 203m store records of identifiers X1, X2, .... The individual storage units store data about different items; however, some of the items may be common to the records stored in a plurality of data storage units.

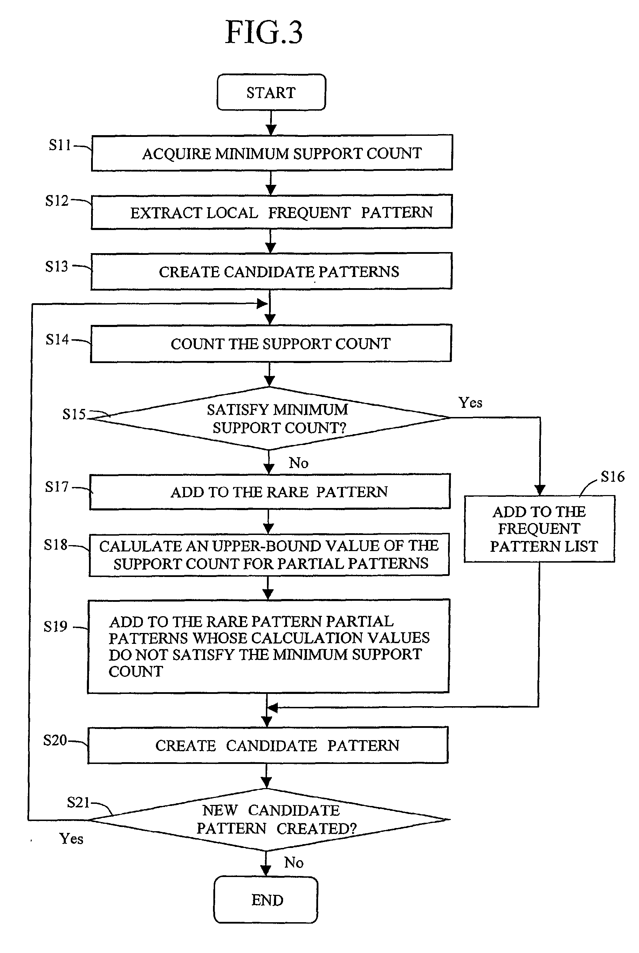

Fig. 3 shows a flowchart of the procedure for data analysis. A user first inputs a minimum value of the support count of a frequent pattern to be extracted to the pattern extraction unit 201 via the input unit 205. The pattern extraction unit acquires the input minimum support count (S11), stores it in the memory unit 215, and then transmits the minimum value to the data processing units 202a, 202b, ..., and 202m. The minimum support count is called a minimum support count. The data processing units 202a, 202b, ..., and 202m receive the minimum support count transmitted from the pattern extraction unit and store it in the memory units 225a, 225b, ..., and 225m, respectively. Thereafter, the individual data processing units 202a, 202b, ..., and 202m extract, using their own frequent pattern extraction units 221a, 221b, ..., and 221m, patterns of items satisfying the minimum support count (to be referred to as local frequent patterns) from the data stored in the individually connected data storage units 203a, 203b, ..., and 203m (S12).

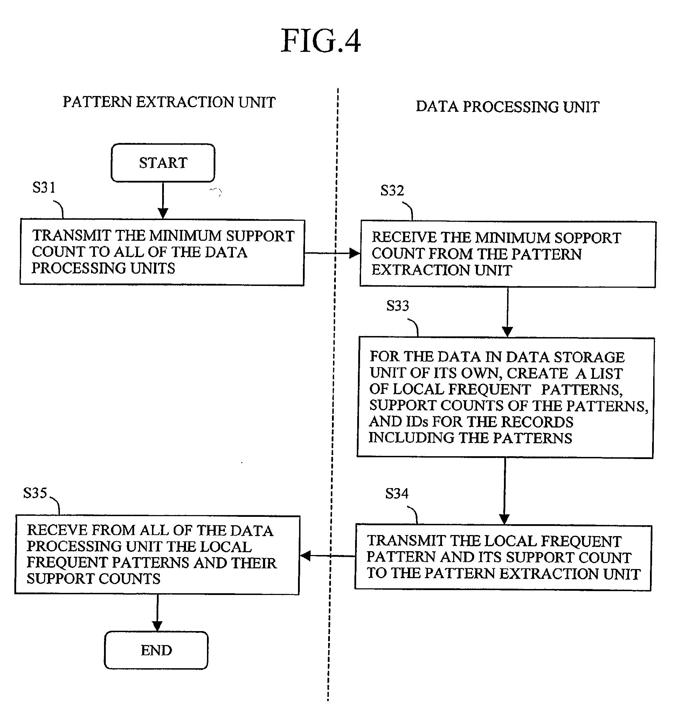

Figs. 4 illustrates the relationship between the pattern extraction unit and the data processing unit during the process of local frequent pattern extraction in step S12 of Fig. 3. The pattern extraction unit 201 transmits the minimum support count to each of the data processing units 202a, 202b, ..., and 202m (S31). After receiving the minimum support count from the pattern extraction unit 201 (S32), the data processing units 202a, 202b, ..., and 202m store the minimum support count in the memory units 225a, 225b, ..., and 225m, respectively. The individual data processing units then extract, using their own frequent pattern extraction units 221a, 221b, ..., and 221m, the local frequent patterns only from the data stored in the respectively connected storage units 203a, 203b, ..., and 203m, the local frequent patterns being item patterns satisfying the minimum support count. Each data processing unit then creates a list of identifiers (ID list) of records containing the support count and item pattern of each local frequent pattern, and stores the list in the memory unit (S33). The extraction of the local frequent patterns within a single database can be carried out by conventional methods as disclosed in Reference 1.

The individual data processing units 202a, 202b, ..., and 202m transmit the entire local frequent patterns and their support counts to the pattern extraction unit 201 (S34). After receiving the local frequent patterns and their support counts from the entire data processing units (S35), the pattern extraction unit stores them in the memory unit 215 as local frequent pattern information. By this procedure, the pattern extraction unit 201 acquires the local frequent patterns in the entire data storage units 203a, 203b, ..., and 203m (S35).

Referring back to Fig. 3, the pattern extraction unit 201 provides regions in the memory unit 215 for retaining a frequent pattern list of frequent patterns and for retaining a rare pattern list of rare patterns that are item patterns known to not satisfy the minimum support count, and empties those regions. After receiving the local frequent patterns and their support counts from the entire data processing units 202a, 202b, ..., and 202m, the pattern extraction unit 201 joins, in the candidate pattern creating unit 211, any two or more local frequent patterns extracted in the different data processing units, and thereby creates a candidate pattern which is an item pattern with an unknown support count (S13). The support count is then counted up in the support count counter unit (S14). For example, if the pattern extraction unit 201 receives local frequent patterns PA1, PA2, ..., PAm from the data processing unit 202a, local frequent patterns PB1, PB2, ..., and PBn from the data processing unit 202b, and local frequent patterns PM1, PM2, ..., and PMs from the data processing unit 202m, the candidate pattern creating unit joins those local candidate patterns in all possible combinations to create candidate patterns such as {PA1, PB1}, {PA1, PB2}, ..., {PA1, PB1, PM1}, ..., {PAm, PBn, ..., PMs}, for example.

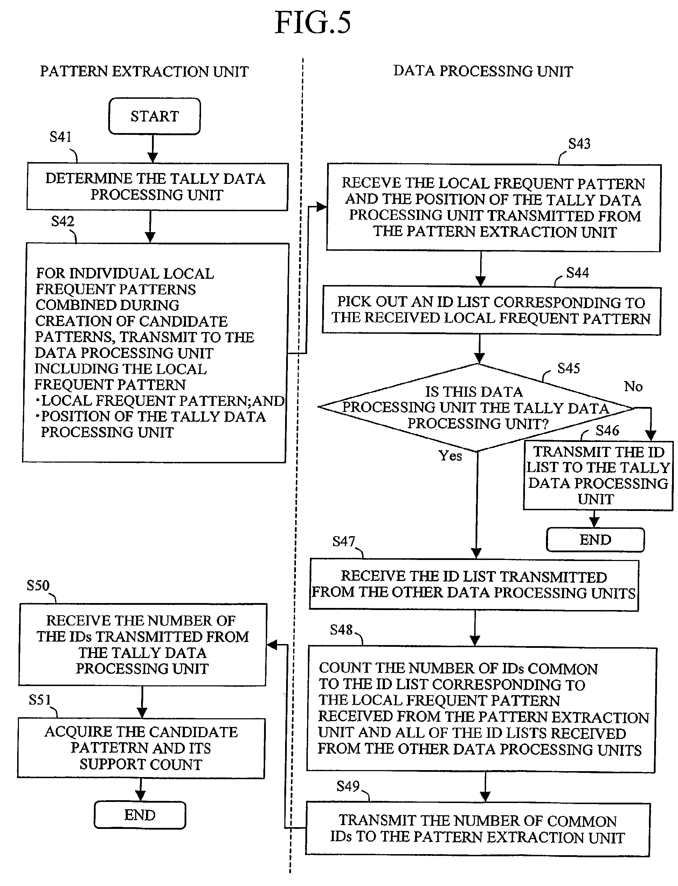

Fig. 5 shows the procedure for counting up the support count for a candidate pattern. The pattern extraction unit 201 designates any one data processing unit (data processing unit 202b in the present example) as a tally data processing unit for comparing the entire ID lists, by referring to the processing unit position information (S41). The pattern extraction unit 201 then transmits the local frequent pattern constituting the candidate pattern created in step 13 of Fig. 3 and the position of the tally data processing unit to the data processing unit where the local frequent pattern was extracted (S42).

For example, in the case where {PAm, PBn, PMs} has been selected as the candidate pattern and the data processing unit 202b has been designated as the tally data processing unit, the local pattern PAm and the address of the data processing unit 202b are transmitted to the data processing unit 202a. Likewise, the local pattern PMs and the address of the data processing unit 202b are transmitted to the data processing unit 202m. To the data processing unit 202b are transmitted the local frequent pattern PBn and the address of the data processing unit 202b as the address of the tally data processing unit. Upon receiving its own address as the address of the tally data processing unit, the data processing unit 202b knows that it has been designated as the tally data processing unit.

After receiving the local frequent pattern and the position of the tally data processing unit from the pattern extraction unit 201 (S43), the data processing units 202a and 202m that are not designated as the tally data processing unit store the position of the tally data processing unit in the memory unit, and pick out ID lists corresponding to the local frequent pattern that has been received (S44). Proceeding from step S45 to S46, the data processing units 202a and 202m transmit the picked out ID lists to the tally data processing unit (S46). In this example, the data processing unit 202a transmits the ID list of the item pattern PAm to the tally data processing unit 202b, while the data processing unit 202m transmits the ID list of the item pattern PMs to the tally data processing unit 202b.

The data processing unit 202b, which has been designated as the tally data processing unit, proceeds from step S45 to S47 and receives the ID lists transmitted from the other data processing units. The tally data processing unit further counts up, in the common ID counter unit 222, the number of IDs common to the ID list of the self-designated item pattern PBn and the entire ID lists transmitted from the other data processing units (S48), and transmits the number of the common IDs to the pattern extraction unit 201 (S49). The pattern extraction unit 201, after receiving the number of IDs from the data processing unit 202b designated as the tally data processing unit (S50), thus obtains the support count for the candidate pattern (S51). By the above procedure, the support count for the selected candidate pattern {PAm, PBn, PMs} is counted up.

Now referring back to Fig. 3, the pattern extraction unit 201 determines whether the counted-up support count is equal to or more than the minimum support count (S15). If so, the candidate pattern is considered as a frequent pattern and that item pattern and the support count are added to the frequent pattern list (S16). Thereafter, the procedure goes to step S20 to prepare another candidate pattern. If the support count is less than the minimum support count in the determination of S15, the candidate pattern is added to the rare pattern list (S17), and an upper-bound value of the support count is calculated according to formula (1) in the support-count upper-bound value calculation unit 213 for partial patterns that can be prepared from the candidate pattern (S18). If the calculated value is less than the minimum support count, this shows that these partial patterns do not satisfy the minimum support count, and therefore these partial patterns are added to the rare pattern list (S19). If the upper-bound value of the support count of the partial patterns is not less than the minimum support count, no process is performed in step S19.

If the support count is unknown and a candidate pattern can be prepared which is not an upper-level pattern of the item pattern included in the rare pattern list, the candidate pattern is created (S20), and, returning from step S21 to S14, a count-up process is performed. If a new candidate pattern cannot be created, the procedure comes to an end.

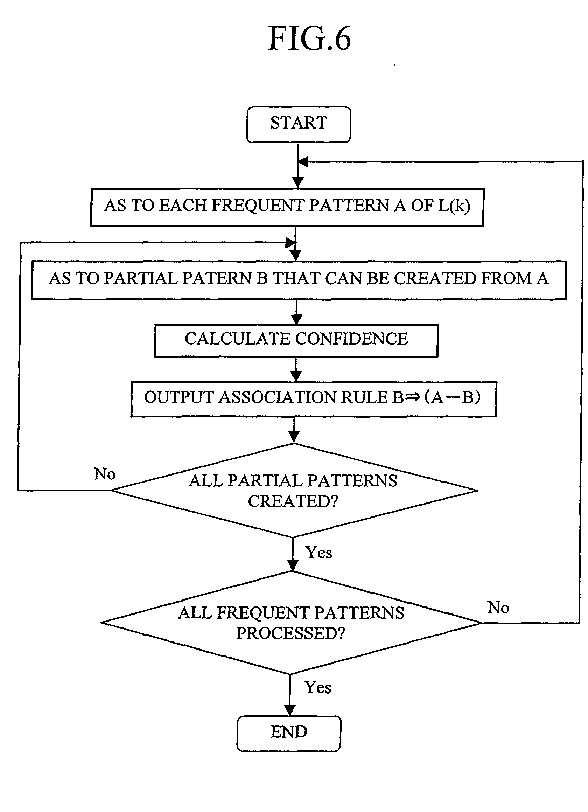

Based on the frequent patterns included in the frequent pattern list and the support count, the overall analysis result is obtained. The manner in which an association rule is created based on the frequent pattern and its support count may be as known from Reference 1, for example. The process for creating the association rule is shown in Fig. 6.

To create the association rule, partial patterns are created from each frequent pattern included in the frequent pattern list, and the partial patterns are used as the assumption, with the patterns of items included in the frequent pattern but not included in those partial patterns being used as the conclusion. The support count of the frequent pattern is the support count of the association rule. The support can be calculated by dividing the support count by the number of the entire records in the database. The confidence of the association rule can be calculated by dividing the support count of the frequent pattern by the support count of the item pattern in the assumption. These results are displayed on the output unit 206 such as a display unit.

As described above in a general manner, in the analysis method according to the present invention, the local frequent patterns, ID lists, and the number of common IDs are exchanged between the pattern extraction unit 201 and the individual data processing units 202a, 202b, ..., and 202m such that a frequent pattern straddling across different databases can be extracted. During the process, an upper-bound value of the support count is calculated which helps to avoid the generation of candidate patterns which cannot be frequent patterns, thereby reducing the number of item patterns to be processed during data analysis. While the pattern extraction unit 201 acquires the information about the frequent pattern and its support count, it does not obtain the identifier of the records that contains the individual frequent patterns either during or at the end of the analysis process. While the individual data processing units 202a, 202b, ..., and 202m acquire the items of the frequent pattern that are contained in the respective data storage units 203a, 203b, ..., and 203m, they do not acquire the entire items. During the analysis process, while they process the ID lists, i.e., the lists of identifiers of the records, they do not know for which frequent pattern a particular ID list is. Likewise, while the tally data processing unit processes the ID lists transmitted from the other data processing units, it does not know the item patterns corresponding to these ID lists, and while it acquires the support count for the frequent pattern, it does not know the frequent pattern itself.

Thus, in accordance with the present embodiment, the frequent pattern straddling over different databases and the support count for the frequent pattern can be obtained without simultaneously obtaining frequent pattern and the identifier of the record containing the frequent pattern. Further, during the analysis process, an upper-bound value for the support count is calculated so that candidate patterns that cannot be frequent patterns can be detected prior to the count-up of the support count. This makes it possible to avoid counting up the support counts for these candidate patterns, thereby limiting the candidate patterns and reducing the load during analysis.

While in the above described embodiment, the support count was utilized, the support, which is the quotient of the support count divided by the number of the entire records, can also be used for analysis in a similar fashion. When the numbers of the records included in the individual databases are different, the number of records common to all of the databases is obtained, so that the support can be calculated by using that number as the modulus. If the association rule is unnecessary, the step of creating the association rule may be omitted.

Hereafter, the process performed in each processing unit will be described by taking two databases for gene data and case data as examples.

The databases to be analyzed are sets of records with a plurality of attributes, each database containing records of a different attribute. When case data and gene data in medicine are taken for examples, one record corresponds to a patient. The attributes in the case data are information relating to the disease of the patients, such as sex, age, diagnosed disease name, prescribed drug or the like. In the gene data, the attributes are information relating to the gene of the patient, such as the genetic sequence.

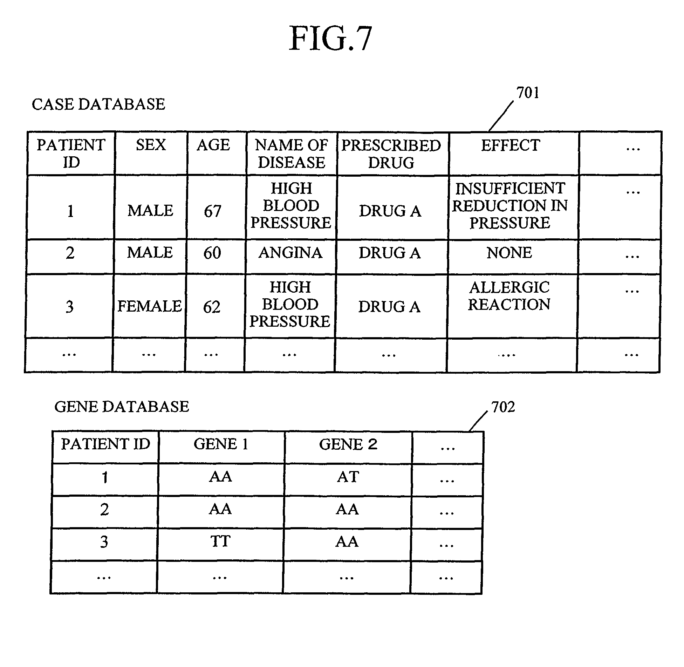

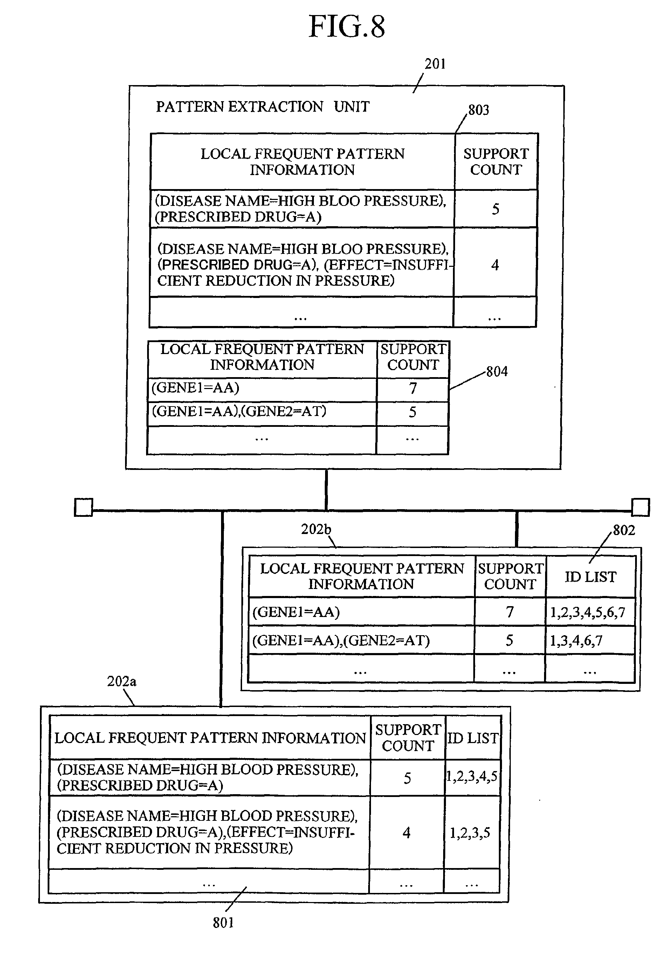

Fig. 7 shows an example of the case data and gene data. As shown, the example consists of a case database (701) and a gene database (702), both having patient ID as the identifier. The total number of records is 10. It is assumed in the following that in a preliminary processing in the pattern extraction unit 201, the user inputs 4 as a minimum value of support count, case data is stored in the data storage unit 203a connected to the data processing unit 202a, gene data is stored in the data storage unit 203b connected to the data processing unit 202b, and local frequent patterns shown in Fig. 8 have been extracted in the individual data processing units.

In the data processing unit 202a, local frequent patterns consisting of items included in the case database, their support counts, and a list of identifiers 80.1 are extracted. In the data processing unit 202b, local frequent patterns consisting of items included in the gene database, their support counts, and a list of identifiers 802 are extracted. The pattern extraction unit 201 retains information 803 about the local frequent patterns and their support count transmitted from the data processing unit 202a, and information 804 about the local frequent patterns and their support count transmitted from the data processing unit 202b.

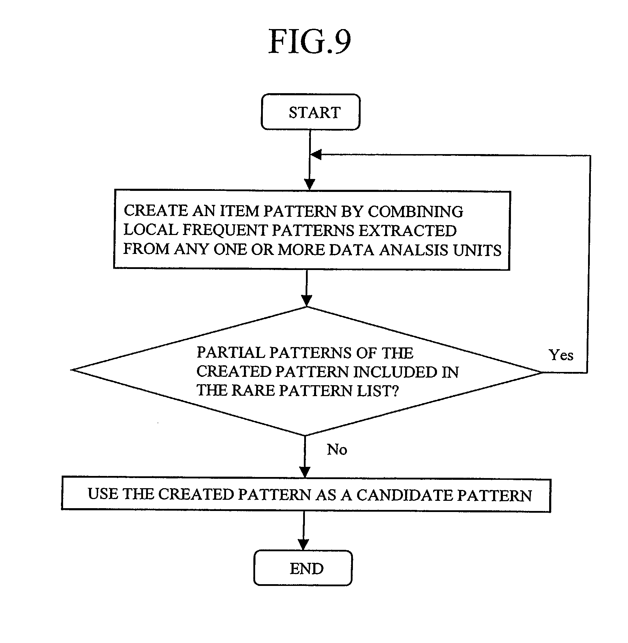

Fig. 9 shows a flowchart of the procedure of candidate pattern extraction in the pattern extraction unit 201. In this example, when a local frequent pattern {(disease name=high blood pressure), (drug=drug A), (efficacy of the drug=insufficient pressure reduction)} extracted from the case database, a local frequent pattern {(gene 1=AA), (gene 2=AT)} extracted from the gene database are joined, a candidate pattern is created which reads: {(disease name=high blood pressure), (drug=drug A), (efficacy of the drug=insufficient pressure reduction), (gene 1=AA), (gene 2=AT)}. Thereafter, the support count for the candidate pattern is counted up. When the tally data processing unit is realized by the data processing unit 202b retaining the gene database, the pattern extraction unit 201 transmits to the data processing unit 201a the item pattern {(disease name=high blood pressure), (drug=drug A), (efficacy of the drug=insufficient pressure reduction)} and the fact that the data processing unit 202b is to function as the tally data processing unit, while transmitting to the data processing unit 202b the item pattern {(gene 1=AA), (gene 2=AT)} and the fact that the data processing unit 202b is to function as the tally data processing unit.

The data processing unit 202a picks out ID lists 1, 2, 3 and 5 that correspond to the item pattern {(disease name=high blood pressure), (drug=drug A)} transmitted from the pattern extraction unit 201, and transmits them to the data processing unit 202b or tally data processing unit. The data processing unit 202b picks out ID lists 1, 3, 4, 6 and that correspond to the item pattern {(gene 1=AA), (gene 2=AT)} transmitted from the pattern extraction unit 201 and compares them with the ID lists 1, 2, 3 and 5 transmitted from the data processing unit 202a, to thereby find the number of common IDs. In the present example, IDs 1 and 3 are common, so the number of common IDs is 2. Thus, the data processing unit 202b transmits the number of common IDs "2" to the pattern extraction unit 201.

Based on the number transmitted from the data processing unit 202b designated as the tally data processing unit, the pattern extraction unit 201 knows that the support count for the candidate pattern {(disease name=high blood pressure), (drug=drug A), (efficacy of the drug=insufficient pressure reduction), (gene 1=AA), (gene 2=AT)} is 2. Because in the present example the minimum support count has been set at 4, this candidate pattern is added to the rare pattern list.

As the support count that has been counted up for the item pattern did not satisfy the minimum support count, an upper-bound value of the support count for a partial pattern of this item pattern is calculated. For example, for a partial pattern {(disease name=high blood pressure), (drug=drug A), (gene 1=AA), (gene 2=AT)}, the upper-bound value of the support count is calculated according to formula (1) thus: $2+\min[(5-2), (5-4)]=3$. Since this calculated value is less than the minimum support count, this partial pattern is added to the rare pattern, and an upper-bound value of the support count for a partial pattern of this partial pattern is again calculated. In the case of a partial pattern {(disease name=high blood pressure), (drug=drug A), (gene 1=AA)}, the upper-bound value of the support count is calculated according to formula (1) thus: $2+\min[(5-4), (7-5)]+\min[(4-2), (7-5)+\min[(5-2), (5-4)]=6$. This not being less than the minimum support count, this partial pattern is not added to the list of rare patterns and instead considered as a candidate for counting up the support count without calculating an upper-bound value of the support count for a partial pattern of this partial pattern.

Next, the local frequent patterns are joined to create an item pattern. If the item pattern is not an upper-level pattern of an item pattern included in the list of rare patterns and the support count is unknown, a count-up process is performed again on the support count by using the created item pattern as a candidate pattern. The created item patterns include any upper-level pattern of the already extracted frequent pattern, any partial pattern of an item pattern included in the rare pattern list, a partial pattern of an item pattern as a frequent pattern, and an item pattern for which the support count has not been counted up. For example, an item pattern {(disease name=high blood pressure), (drug=drug A), (gene 1=AA)} becomes a candidate pattern. This candidate pattern is processed in the same manner to provide a support count of 5. Because the minimum support count is set at 4 in the present example, this item pattern is considered a frequent pattern and added to the frequent pattern list. By repeating the above analysis procedure, frequent patterns are obtained. When no new candidate pattern is created, the procedure comes to an end.

The association rule is created by making an assumption and a conclusion out of the partial patterns of each frequent pattern included in the frequent pattern list. For example in the case of a frequent pattern {(disease name=high blood pressure), (drug=drug A), (gene 1=AA)}, (gene 1=AA) is taken as the assumption, and {(disease name=high blood pressure), (drug=drug A)} is taken as the conclusion, so that an association rule if[(gene 1=AA)] then [(disease name=high blood pressure), (drug=drug A)] is created. The support for this association rule is calculated such that 5÷10=0.5, and the confidence is 5÷7=0.71. Other association rules can be created from every possible partial pattern that can be created from the frequent pattern {(disease name=high blood pressure), (drug=drug A), (gene 1=AA)}, (gene 1=AA)}.

By the above analysis process, the pattern extraction unit 201 learns that, for the item pattern {(disease name=high blood pressure), (drug=drug A), (efficacy of the drug=insufficient reduction in pressure), (gene 1=AA), (gene 2=AT)} which was created by joining the local frequent pattern {(disease name=high blood pressure), (drug=drug A), (efficacy of the drug=insufficient reduction in pressure)} extracted in the data processing unit 202a and the local frequent pattern {(gene 1=AA), (gene 2=AT)} extracted in the data processing unit 202b, the support count is 2, without identifying the patient ID that satisfies this item pattern. The pattern extraction unit 201 further learns that the support count for the partial pattern {(disease name=high blood pressure), (drug=drug A), (gene 1=AA), (gene 2=AT)} of the item pattern cannot be 4 or the minimum support count or more. Further, in the data processing unit 202b, designated as the tally data processing unit, the local frequent pattern corresponding to the ID lists transmitted from the data processing unit 202a is unknown, and the candidate pattern for which a count-up process is being performed is unknown. In the data processing unit 202a, the candidate pattern for which a count-up process is being performed is unknown. Thus, a condition is maintained where none of the pattern extraction unit 201 and individual data processing units 202a and 202b can identify the frequent pattern and the patient ID corresponding to the frequent pattern. Furthermore, by learning that, for the item pattern {(disease name=high blood pressure), (drug=drug A), (gene 1=AA), (gene 2=AT)}, the support count cannot be the minimum support count or more without performing a count-up process, counting-up of unnecessary item patterns can be avoided and so the number of the item patterns for which a count-up process is needed can be reduced, thereby contributing to a reduction in the load during analysis.

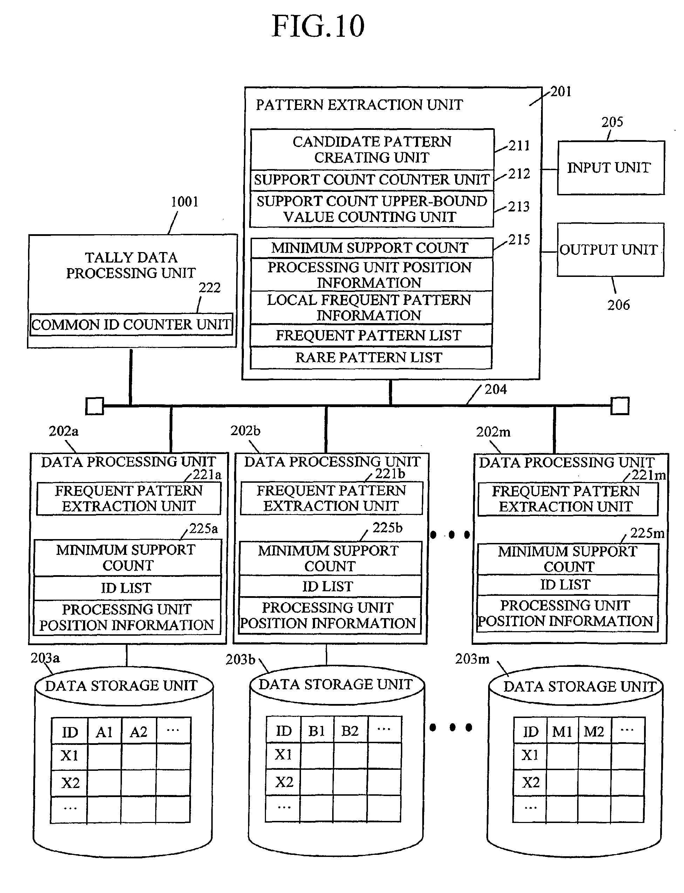

Fig. 10 shows an example of the system structure according to a second embodiment of the present invention. In this embodiment, a pattern extraction unit 201, a tally data processing unit 1001, and two or more data processing units 202a, 202b, ..., and 202m are connected via a communication path 204. Each data processing unit is connected to a data storage unit 203a, 203b, ..., or 203m. In the present embodiment, each data processing unit has an equivalent function to that of the data processing unit 202a shown in Fig. 2. A tally data processing unit 1001 has an equivalent function to the common ID counter unit 222 of the data processing unit 202b shown in Fig. 2.

Hereafter, the process performed in each unit will be described. First, the pattern extraction unit 201 acquires a minimum support count based on user input, and transmits it to the individual data processing units 202a, 202b, ..., and 202m. Upon receiving the minimum support count, the individual data processing units 202a, 202b, ..., and 202m extract from the respectively connected data storage units 203a, 203b, ..., and 203m local frequent patterns of the minimum support count or more, and transmit the thus extracted local frequent patterns and their support counts to the pattern extraction unit 201. The pattern extraction unit 201 receives the local frequent patterns and their support counts from the entire data processing units.

Then, the pattern extraction unit 201 provides regions in a memory unit 215 for retaining frequent patterns and rare patterns, and empties those regions. After receiving the local frequent patterns and support counts from the entire data processing units, the pattern extraction unit 201 creates candidate patterns and transmits local frequent patterns constituting the candidate patterns to the data processing units where the local frequent patterns were extracted. The data processing units receive the local frequent patterns from the pattern extraction unit, pick out ID lists corresponding to the local frequent patterns, and transmit them to the tally data processing unit 1001. Upon receiving the ID lists from the data processing units, the tally data processing unit 1001 counts the number of IDs common to the entire ID lists, and transmits the number to the pattern extraction unit 201.

By receiving the number of IDs from the tally data processing unit 1001, the pattern extraction unit 201 acquires the support counts for the candidate patterns. If the support count is not less than the minimum support count, the particular candidate pattern is added to the list of rare patterns. If the support count is less than the minimum support count, the candidate pattern is added to the rare pattern list, partial patterns of the candidate pattern are created, an upper-bound value of the support count is calculated, and item patterns that cannot be the minimum support count or more are detected, the item patterns being added to the list of rare patterns. Then, a new candidate pattern is created and the support count is counted up in the pattern extraction unit, this being repeated so that frequent patterns and their support counts are extracted. Thus, data analysis can be performed by independently arranging the tally data processing unit, which in the first embodiment is performed by one of the data processing units redundantly.

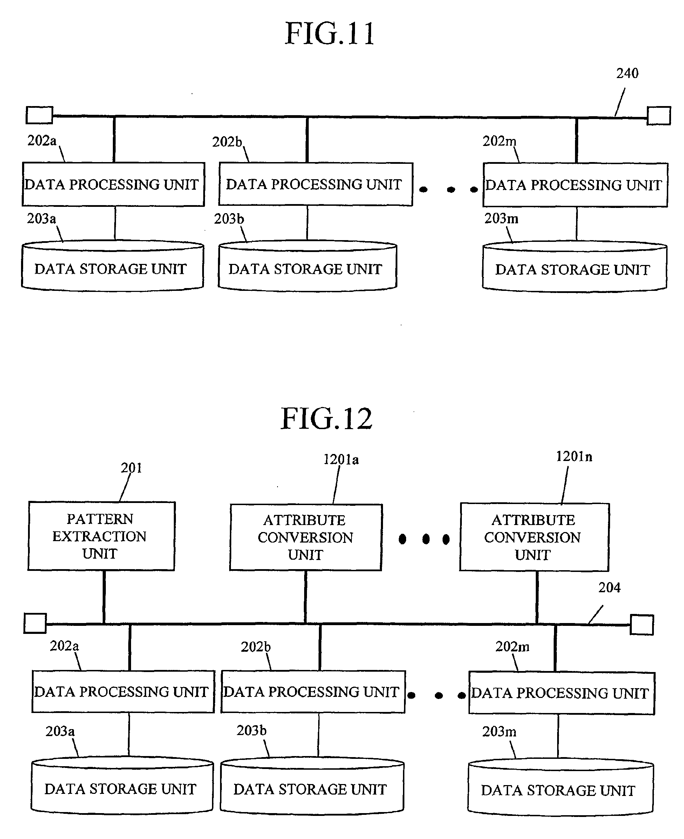

Fig. 11 shows an example of the system structure according to a third embodiment of the present invention, in which two or more data processing units 202a, 202b, ..., and 202m are connected by a communication path 204, with each data processing unit being connected to a data processing unit 203a, 203b, ..., or 203m. In the first embodiment, the sole pattern extraction unit and two or more data processing units were connected by communication path, with each data processing unit being connected to a data storage unit. In the third embodiment, however, the pattern extraction unit is not independently provided, and instead the individual data processing units 202a, 202b, ..., and 202m perform the process of the pattern extraction unit redundantly.

Hereafter, the process performed in each unit will be described. Initially, any one of the data processing units acquires a minimum support count and transmits it to the other data processing units. Each of the data processing units 202a, 202b, ...,and 202m receives the minimum support count from the data processing unit that acquired the minimum support count, extracts local frequent patterns, and transmits them and their support counts to the other data processing units. Next, each of the data processing units receives the local frequent patterns and their support counts from the other data processing units, provides regions in the memory unit for retaining frequent and rare patterns, empties them, and creates candidate patterns, so that a tally data processing unit can be determined. The tally data processing unit is determined such that it is not the data processing unit where the candidate patterns were created.

To the data processing unit that extracted the local frequent patterns constituting the candidate patterns, the individual data processing units transmit the corresponding local frequent patterns and the position of the tally data processing unit. Next, the individual data processing units receive the local frequent patterns and the position of the tally data processing unit from the data processing unit that created the candidate patterns, picked out ID lists corresponding to the received local frequent patterns and transmit them to the tally data processing unit. Upon receiving the ID lists from the individual data processing units, the tally data processing unit counts the number of IDs common to the entire ID lists, and transmits that number to the data processing unit that created the candidate pattern.

The data processing unit that created the candidate patterns receives the number of IDs from the tally data processing unit and obtains the candidate patterns and their support counts. If the support count is not less than the minimum support count, the particular pattern is added to the list of frequent patterns. If the support count is less than the minimum support count, the candidate pattern is added to the rare pattern list, partial patterns of that candidate pattern are created, an upper-bound value of the support count is calculated so that item patterns that cannot be the minimum support count or more can be detected and added to the rare pattern list. Next, any one of the data processing units creates a new candidate pattern and the support count is counted up, and this is repeated to extract frequent patterns and their support counts. Thus, each data processing unit performs the process of the pattern extraction unit redundantly for data analysis without there being independently provided the pattern extraction unit.

While the above description related to the case where all of the data processing units extracted the entire frequent patterns, it is possible to transmit the item patterns processed by each data processing unit to the other data processing units in order to avoid processing the same item pattern. It is also possible to specify the item patterns to be processed by each data processing unit so as to avoid processing the same item pattern. Furthermore, not all but specified one or ones of the data processing units may perform the process of the pattern extraction unit to realize the analysis process.

Fig. 12 shows an example of the system according to a fourth embodiment of the present invention. In this embodiment, a pattern extraction unit 201, at least one identifier conversion unit 1201a, ..., and 1201n, and at least two data processing units 202a, 202b, ..., and 202m are connected by a communication path 204, each data processing unit being connected to a data storage unit 203a, 203b, ..., or 203m. In the case where the records contained in the databases retained in the individual data storage units 203a, 203b, ..., and 203m are not associated by the same identifiers among the databases and instead the individual records are associated by identifiers converted by a specific conversion system, the data processing units transmit the list of identifiers to the tally data processing unit via an identifier conversion unit.

This embodiment differs from the first embodiment in that in the process of counting up the support count of the item pattern, a list of identifiers corresponding to the item pattern transmitted by the pattern extraction unit is transmitted to the identifier conversion unit, where specific identifiers are converted and a list of converted identifiers is transmitted to the tally data processing unit. Thus, by converting the record identifiers in the identifier conversion unit data analysis can be performed in an arrangement where the identifiers of the records contained in the databases are different.

In the following, the process performed in each processing unit will be described by taking two databases, one for gene data and the other for case data, as an example.

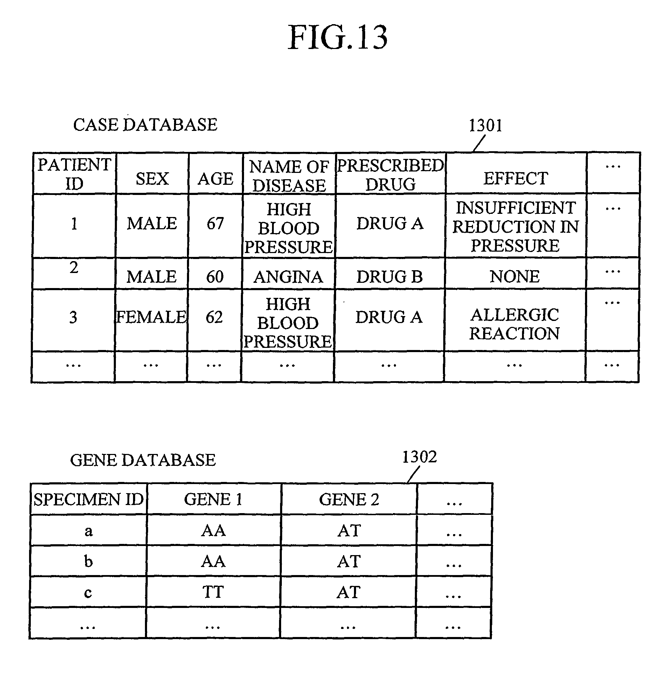

Fig. 13 shows an example of a case database and a gene database. The illustrated example consists of a case database 1301 including records with patient IDs as an identifier and a gene database 1302 including records with specimen IDs as an identifier. The number of the entire records is 10. The records in the case database are managed by the patient IDs, while the records in the gene database are managed by the specimen IDs, the individual records having different identifiers. The patient IDs and specimen IDs are associated with each other by an identifier conversion table.

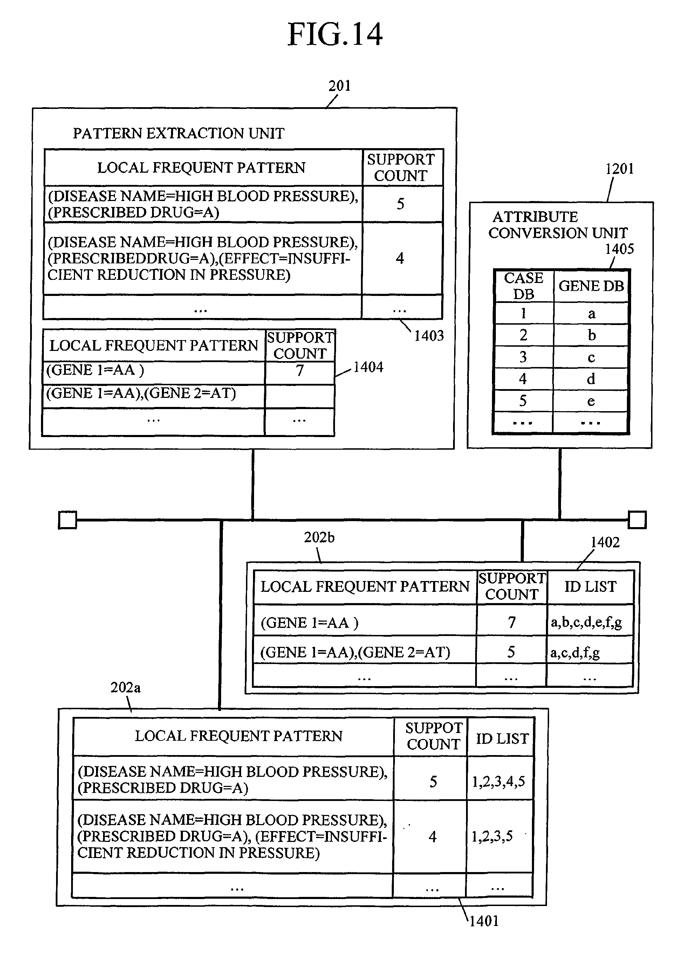

In the following description, it will be assumed that in a preliminary processing in the pattern extraction unit 201, the user inputs an input value of 4 as the minimum value of the support count, that case data is stored in the data storage unit 203a connected to the data processing unit 202a, that gene data is stored in the data storage unit 203b connected to the data processing unit 202b, that the individual data processing units extract the local frequent patterns shown in Fig. 14, and that an identifier conversion table 1405 is stored in the identifier conversion unit 1201.

Referring to Fig. 14, the data processing unit 202a extracts local frequent patterns formed by items included in the case database, their support counts and a list 1401 of identifiers. The data processing unit 202b extracts local frequent patterns formed by items included in the gene database, their support counts and a list 1402 of identifiers. The pattern extraction unit 201 retains information 1403 about the local frequent patterns and their support count transmitted from the data processing unit 202a, and information 1404 about the local frequent patterns and their support counts transmitted from the data processing unit 202b.

In this example, when a local frequent pattern {(disease name=high blood pressure), (drug=drug A), (efficacy of the drug=insufficient pressure reduction)} extracted from the case database, and a local frequent pattern {(gene 1=AA), (gene 2=AT)} extracted from the gene database, are joined, a candidate pattern is created which reads: {(disease name=high blood pressure), (drug=drug A), (efficacy of the drug=insufficient pressure reduction), (gene 1=AA), (gene 2=AT)}. Thereafter, the support count for the candidate pattern is counted up. When the data processing unit 202b retaining the gene database is used as the tally data processing unit, the pattern extraction unit 201 transmits to the data processing unit 202a the item pattern {(disease name=high blood pressure), (drug=drug A), (efficacy of the drug=insufficient pressure reduction)} and the fact that the data processing unit 202b is to function as the tally data processing unit, and to the data processing unit 202b the item pattern {(gene 1=AA), (gene 2=AT)} and the fact that the data processing unit 202b is to function as the tally data processing unit.

The data processing unit 202a picks out the ID lists 1, 2, 3 and 5 that correspond to the item pattern {(disease name=high blood pressure), (drug=drug A)} transmitted from the pattern extraction unit 201 and transmits them to the identifier conversion unit 1201, together with the position of the tally data processing unit. The identifier conversion unit 1201 transmits the ID lists a, b, c and e that correspond to the received ID lists 1, 2, 3 and 5 to the data processing unit 202b which is the tally data processing unit as indicated by the received position. The data processing unit 202b picks out the ID lists a, c, d, f and g that correspond to the item pattern {(gene 1=AA), (gene 2=AT)} transmitted form the pattern extraction unit 201, and compares them with the ID lists a, b, c and e transmitted from the identifier conversion unit 1201 to find the number of common IDs. In this example, IDs a and c are common, so the number of common IDs is 2. Thus, the data processing unit 202b transmits this number of common IDs, 2, to the pattern extraction unit 201.

Based on the number transmitted from the data processing unit 202b designated as the tally data processing unit, the pattern extraction unit 201 learns that the support count for the candidate pattern {(disease name=high blood pressure), (drug=drug A), (efficacy of the drug=insufficient pressure reduction), (gene 1=AA), (gene 2=AT)} is 2. Thus the support count for the candidate pattern is obtained. The determination as to whether it is a frequent pattern, addition to the frequent pattern list or rare pattern list, calculation of the upper-bound value of the support count for partial patterns, and creation of a candidate pattern are performed in the same manner as in the first embodiment.

By the above analysis process, even when the identifiers for the records are not identical between different databases, the pattern extraction unit can acquire the support count of two for the item pattern {(disease name=high blood pressure), (drug=drug A), (efficacy of the drug=insufficient pressure reduction), (gene 1=AA), (gene 2=AT)}, which was created by joining the local frequent pattern {(disease name=high blood pressure), (drug=drug A), (efficacy of the drug=insufficient pressure reduction)} extracted in the data processing unit 202a and the local frequent pattern {(gene 1=AA), (gene 2=AT)} extracted in the data processing unit 202b, without identifying the patient ID or specimen ID that satisfies the item pattern.

While in the present embodiment, the identifier conversion unit 1201 was independently provided, the process performed by it may be undertaken by a data processing unit.

Further, while in the above-described embodiments, the data processing unit retained the ID list, which is the list of identifiers for records including the individual local frequent patterns, the system may be arranged such that the data processing unit does not retain the ID list but instead during the support count counting-up process, each data processing unit searches its own data storage unit for records including the item patterns transmitted from the pattern extraction unit, creates an ID list and extracts the frequent patterns and their support counts.

Thus, in accordance with the present invention, item patterns straddling over different databases and the number of records containing the item patterns can be extracted from the databases by a distributed processing. Further, in the case where integration of the databases should be avoided and, even during the analysis process, integration of the databases cannot be permitted in order to prevent the leaking of database-integrating information, item patterns straddling across databases can be extracted. Furthermore, by estimating the upper-bound value of the number of records containing item patterns that are subsets of item patterns for which the number of records containing them is known, and by thus limiting the number of candidates to be searched, the amount of data to be processed during analysis can be reduced.

## Claims

1. A method of extracting an item pattern straddling across two or more databases managed individually by a plurality of processing units (202), wherein an item is a pair of an attribute and an attribute value, and an item pattern is a combination of items, the method comprising:

    a first step of concentrating item patterns extracted from the databases managed by the plurality of processing units (202) onto a pattern extraction unit (201);
    a second step of creating, in the pattern extraction unit (201), a joined item pattern comprising a first item pattern extracted from a first database and a second item pattern extracted from a second database, wherein a first processing unit (202) managing the first database is notified of the first item pattern and a second processing unit (202) managing the second database is notified of the second item pattern;
    a third step of concentrating, from the first and second processing units (202) onto a tally processing unit which is different from the pattern extraction unit (201), a list of identifiers for records in the first database including the first item pattern and a list of identifiers for records in the second database including the second item pattern; and
    a fourth step of counting, in the tally processing unit, the number of identifiers that are common to all of the concentrated identifier lists, the number being transmitted to the pattern extraction unit (201).

2. The method according to claim 1, wherein the pattern extraction unit (201) and/or the tally processing unit are doubled by the processing units (202).

3. The method according to claim 1, wherein:

    in the first step, the plurality of processing units (202) extracts item patterns with support counts, or the number of records containing the item pattern, which are not less than a specified minimum support count;
    in the second step, the pattern extraction unit (201) creates joined item patterns with unknown support counts; and
    in the fourth step, the pattern extraction unit (201) selects a joined item pattern with a support count which is not less than the minimum support count, by referring to the number transmitted from the tally processing unit.

4. The method according to claim 3, further comprising the steps of:

    the pattern extraction unit (201) calculating an upper-bound value of the support count for an item pattern with an unknown support count which is a subset of items in a joined item pattern with a known support count, on the basis of the support count for the joined item pattern and a known support count for an item pattern which is a subset of the joined item pattern; and
    the pattern extraction unit (201) deleting a joined item pattern for which the calculated upper-bound value of the support count is less than the minimum support count from candidates for the joined item pattern created in the second step.

5. The method according to claim 4, wherein an upper-bound value Upper $(X'(1)X'(2) ...X'(m))$ of the support count for an item pattern $X'(1)X'2(2)... X'(m)$ consisting of a subset of a joined item pattern $X(1)X(2)...X(m)$ is calculated according to the following equation:

$$Upper(X'(1)X'(2)...X'(m))$$
$$= S(X(1)X(2)...X(m))$$
$$+ \min\{S(X'(i)) - S(X(i)) \mid X'(i) \subseteq X(i), i = 1,2,...,m\}$$
$$+ \sum_{i=1}^{m} \min\{S(X(i)) - S(X), S(X'(j)) - S(X(j)) \mid i \neq j, X'(j) \subseteq X(j), j = 1,2,...,m\}$$

wherein m (an integer of 2 or more) is the number of databases, X(i) is an item pattern consisting of items contained in an i-th database, X'(i) is an item pattern consisting of a subset of items in the item pattern X(i), and S(X) is the support count for an item pattern X.

**6.** The method according to claim 2, wherein in the second step, the pattern extraction unit notifies the first and second processing units of the position of the tally processing unit.

**7.** The method according to claim 1, further comprising the steps of:

creating an association rule such that a partial pattern of the joined item pattern forms an assumption and the remaining pattern of the joined item pattern form a conclusion; and
calculating the confidence of the association rule by dividing the support count for the joined pattern by the support count for the partial pattern.

**8.** A network system comprising a plurality of data processing apparatuses, a pattern extraction processing apparatus and a tally processing apparatus interconnected by a network, the system having a function of extracting an item pattern straddling over two or more databases that are managed individually by the plurality of processing apparatuses, wherein an item is a pair of an attribute and an attribute value in the databases, and an item pattern is a combination of items,
wherein:

the data processing apparatus comprises an item pattern extraction unit for extracting from the individually managed database a pair of an item pattern and an identifier for a record satisfying the item pattern wherein the data processing apparatus transmits the item pattern extracted in the item pattern extraction unit to the pattern extraction processing apparatus, and transmits a list of identifiers for records including those item patterns of the transmitted item patterns that are specified by the pattern extraction processing apparatus to a specified tally processing apparatus;
the pattern extraction processing apparatus comprises an item pattern memory unit for storing the item patterns received from the plurality of data processing apparatus, and a joined item pattern creating unit for creating a joined item pattern by joining item patterns received from different data processing apparatuses while referring to the item patterns stored in the item pattern memory unit, wherein the pattern extraction processing apparatus transmits an item pattern which is a constituent element of the joined item pattern created in the joined item pattern creating unit, and the position of the tally processing apparatus, to the data processing apparatus from which the item pattern was derived, and counts the value received from the tally processing apparatus as the support count for the joined item pattern; and
the tally processing apparatus comprises a common identifier counter unit for counting the number of identifiers that are common to all of the received lists of identifiers, wherein the tally processing apparatus transmits the value counted by the common identifier counter unit to the pattern extraction processing apparatus.

**9.** The network system according to claim 8, wherein the pattern extraction processing apparatus and/or the tally processing apparatus are doubled by the data processing apparatus.

**10.** A processing apparatus for performing part of the process of extracting an item pattern straddling over two or more databases managed individually by a plurality of processing units (202), wherein an item is a pair of an attribute and an attribute value in the databases, and an item pattern is a combination of items, the processing apparatus comprising:

an item pattern memory unit for storing item patterns sent from the plurality of processing units;

a joined item pattern creating unit for creating a joined item pattern comprising the combination of a first item pattern sent from a first processing unit (202) and a second item pattern sent from a second processing unit (202), by referring to the item patterns stored in the item pattern memory unit; and

a support count counter unit which transmits the first item pattern and the position of the tally processing unit to the first processing unit, transmits the second item pattern and the position of the tally processing unit to the second processing unit, prompts the first processing unit to transmit an identifier list of records including the first item pattern, prompts the second processing unit to transmit an identifier list of records including the second item pattern, and counts the value received from the tally processing unit as the support count for the joined item pattern.

11. The processing apparatus according to claim 10, further comprising a support count upper-bound value counter unit for calculating an upper-bound value Upper (X'(1)X'(2)...X'(m)) of the support count for an item pattern X'(1) X'(2)...X'(m) consisting of a subset of the joined item pattern according to the following equation:

$$
\begin{aligned}
&Upper(X'(1)X'(2)...X'(m)) \\
&= S(X(1)X(2)...X(m)) \\
&+ \min\{S(X'(i)) - S(X(i)) \mid X'(i) \subseteq X(i), i = 1,2,...,m\} \\
&+ \sum_{i=1}^{m} \min\{S(X(i)) - S(X), S(X'(j)) - S(X(j)) \mid i \neq j, X'(j) \subseteq X(j), j = 1,2,...,m\}
\end{aligned}
$$

wherein m (an integer of 2 or more) is the number of the databases, X(i) is an item pattern consisting of items included in an i-th database, X'(i) is an item pattern consisting of a subset of items in the item pattern X(i)X(1)X (2)...X(m) is an joined item pattern with a known support count, and S(X) is the support count for the item pattern (X).

12. A processing apparatus for performing part of the process of extracting an item pattern straddling over two or more databases that are individually managed by a plurality of processing units (202), wherein an item is a pair of an attribute and an attribute value in the databases, and an item pattern is a combination of items, the processing apparatus comprising a frequent pattern extraction unit (221) for extracting from the managed database item patterns with support counts that are not less than a specified support count and an identifier list of records including the item pattern, wherein the item patterns extracted in the frequent pattern extraction unit (221) are transmitted to a pattern extraction apparatus, and an identifier list corresponding to an item pattern specified by the pattern extraction apparatus is transmitted to a specified tally processing apparatus.

13. The processing apparatus according to claim 12 which is designated by the pattern extraction apparatus as the tally processing apparatus, and which comprises a common identifier counter unit (222) for counting the number of identifiers common to all of the identifier lists that have been received, wherein the value counted by the common identifier counter unit (222) is transmitted to the pattern extraction processing apparatus.

# FIG.1

```
          ┌──────────────┐
          │    START     │
          └──────┬───────┘
                 │
                 ▼
    ┌────────────────────────┐
    │      USER INPUT        │
    └───────────┬────────────┘
                │
                ▼
    ┌────────────────────────┐
    │      CREATE L(1)        │
    └───────────┬────────────┘
                │
                ▼◄──────────────────────────────┐
    ┌────────────────────────┐                  │
    │      CREARE C(k)        │                  │
    └───────────┬────────────┘                  │
                │                                │
                ▼                                │
    ┌────────────────────────┐                  │
    │      PRUNE   C(k)       │                  │
    └───────────┬────────────┘                  │
                │                                │
                ▼                                │
    ┌────────────────────────┐     ┌────────────────────────┐
    │    SEARCH DATABASES     │     │   INCREMENT k BY ONE   │
    └───────────┬────────────┘     └───────────▲────────────┘
                │                                │
                ▼                                │
    ┌────────────────────────┐                  │
    │      CREATE L(k)        │                  │
    └───────────┬────────────┘                  │
                │                                │
                ▼                          Yes   │
          ╱──────────────────╲────────────────── ┘
         ╱  NEW FREQUENT PATTERN ╲
         ╲     EXTRACTED?        ╱
          ╲────────┬───────────╱
                   │ No
                   ▼
          ┌──────────────┐
          │     END      │
          └──────────────┘
```

# FIG.2

PATTERN EXTRACTION UNIT /201

| CANDIDATE PATTERN CREATING UNIT | /211 |
| SUPPORT COUNT COUNTER UNIT | /212 |
| SUPPORT COUNT UPPER-BOUND VALUE COUNTING UNIT | /213 |

| MINIMUM SUPPORT COUNT | /215 |
| PROCESSING UNIT POSITION INFORMATION |
| LOCAL FREQUENT PATTERN INFORMATION |
| FREQUENT PATTERN LIST |
| RARE PATTERN LIST |

INPUT UNIT /205

OUTPUT UNIT

206

204

202a

**DATA PROCESSING UNIT**

FREQUENT PATTERN EXTRACTION UNIT /221a

MINIMUM SUPPORT COUNT /225a

ID LIST

PROCESSING UNIT POSITION INFORMMTION

203a

DATA STORAGE UNIT

| ID | A1 | A2 | ... |
|----|----|----|-----|
| X1 | | | |
| X2 | | | |
| ... | | | |

202b

**DATA PROCESSING UNIT**

REQUENT PATTERN EXTRACTION UNIT /221b

COMMON ID COUNTER UNIT

222 225b

MINIMUM SUPPORT COUNT

ID LIST

PROCESSING UNIT POSITION INFORMATION

203b

DATE STORAGE UNIT

| ID | B1 | B2 | ... |
|----|----|----|-----|
| X1 | | | |
| X2 | | | |
| ... | | | |

202m

**DATA PROCESSING UNIT**

FREQUENT PATTERN EXTRACTION UNIT /221m

MINIMUM SUPPORT COUNT /225m

ID LIST

PROCESSING UNIT POSITION INFORMATION

203m

DATA STORAGE UNIT

| ID | M1 | M2 | ... |
|----|----|----|-----|
| X1 | | | |
| X2 | | | |
| ... | | | |

17

# FIG.3

START

S11 — ACQUIRE MINIMUM SUPPORT COUNT

S12 — EXTRACT LOCAL FREQUENT PATTERN

S13 — CREATE CANDIDATE PATTERNS

S14 — COUNT THE SUPPORT COUNT

S15 — SATISFY MINIMUM SUPPORT COUNT?

Yes

No

S17 — ADD TO THE RARE PATTERN

S16 — ADD TO THE FREQUENT PATTERN LIST

S18 — CALULATE AN UPPER-BOUND VALUE OF THE SUPPORT COUNT FOR PARTIAL PATTERNS

S19 — ADD TO THE RARE PATTERN PARTIAL PATTERNS WHOSE CALCULATION VALUES DO NOT SATISFY THE MINIMUM SUPPORT COUNT

S20 — CREATE CANDIDATE PATTERN

S21 — NEW CANDIDATE PATTERN CREATED?

Yes

No

END

# FIG.4

PATTERN EXTRACTION UNIT

DATA PROCESSING UNIT

START

S31

TRANSMIT THE MINIMUM SUPPORT COUNT TO ALL OF THE DATA PROCESSING UNITS

S32

RECEIVE THE MINIMUM SOPPORT COUNT FROM THE PATTERN EXTRACTION UNIT

S33

FOR THE DATA IN DATA STORAGE UNIT OF ITS OWN, CREATE A LIST OF LOCAL FREQUENT PATTERNS, SUPPORT COUNTS OF THE PATTERNS, AND IDs FOR THE RECORDS INCLUDING THE PATTERNS

S35

RECEVE FROM ALL OF THE DATA PROCESSING UNIT THE LOCAL FREQUENT PATTERNS AND THEIR SUPPORT COUNTS

S34

TRANSMIT THE LOCAL FREQUENT PATTERN AND ITS SUPPORT COUNT TO THE PATTERN EXTRACTION UNIT

END

# FIG.5

PATTERN EXTRACTION UNIT | DATA PROCESSING UNIT

START

S41

DETERMINE THE TALLY DATA PROCESSING UNIT

S42

FOR INDIVIDUAL LOCAL FREQUENT PATTERNS COMBINED DURING CREATION OF CANDIDATE PATTERNS, TRANSMIT TO THE DATA PROCESSING UNIT INCLUDING THE LOCAL FREQUENT PATTERN
·LOCAL FREQUENT PATTERN;AND
·POSITION OF THE TALLY DATA PROCESSING UNIT

S43

RECEVE THE LOCAL FREQUENT PATTERN AND THE POSITION OF THE TALLY DATA PROCESSING UNIT TRANSMITTED FROM THE PATTERN EXTRACTION UNIT

S44

PICK OUT AN ID LIST CORRESPONDING TO THE RECEIVED LOCAL FREQUENT PATTERN

S45

IS THIS DATA PROCESSING UNIT THE TALLY DATA PROCESSING UNIT?

No

Yes

S46

TRANSMIT THE ID LIST TO THE TALLY DATA PROCESSING UNIT

END

S47

RECEIVE THE ID LIST TRANSMITTED FROM THE OTHER DATA PROCESSING UNITS

S50

RECEIVE THE NUMBER OF THE IDs TRANSMITTED FROM THE TALLY DATA PROCESSING UNIT

S51

ACQUIRE THE CANDIDATE PATTETRN AND ITS SUPPORT COUNT

END

S48

COUNT THE NUMBER OF IDs COMMON TO THE ID LIST CORRESPONDING TO THE LOCAL FREQUENT PATTERN RECEIVED FROM THE PATTERN EXTRACTION UNIT AND ALL OF THE ID LISTS RECEIVED FROM THE OTHER DATA PROCESSING UNITS

S49

TRANSMIT THE NUMBER OF COMMON IDs TO THE PATTERN EXTRACTION UNIT

EP 1 376 397 A2

# FIG.6

```
           ┌─────────────┐
           │    START    │
           └──────┬──────┘
                  │
                  ▼
  ┌──────────────────────────────────────────────┐
  │  AS TO EACH FREQUENT PATTERN A OF L(k)        │
  └──────────────────────┬───────────────────────┘
                         │
                         ▼
  ┌──────────────────────────────────────────────────────┐
  │  AS TO PARTIAL PATERN B THAT CAN BE CREATED FROM A    │
  └──────────────────────┬───────────────────────────────┘
                         │
                         ▼
         ┌───────────────────────────────┐
         │     CALCULATE CONFIDENCE       │
         └───────────────┬───────────────┘
                         │
                         ▼
     ┌───────────────────────────────────────────┐
     │  OUTPUT ASSOCIATION RULE B⇒(A−B)          │
     └───────────────────┬───────────────────────┘
                         │
                         ▼
  No            ◇ ALL PARTIAL PATTERNS ◇
  ◄─────────────   CREATED?
                         │ Yes
                         ▼
                ◇ ALL FREQUENT PATTERNS ◇   No
                   PROCESSED?              ────►
                         │ Yes
                         ▼
                  ┌─────────────┐
                  │     END     │
                  └─────────────┘
```

# FIG.7

CASE DATABASE                                                        701

| PATIENT ID | SEX | AGE | NAME OF DISEASE | PRESCRIBED DRUG | EFFECT | ... |
|---|---|---|---|---|---|---|
| 1 | MALE | 67 | HIGH BLOOD PRESSURE | DRUG A | INSUFFICIENT REDUCTION IN PRESSURE | ... |
| 2 | MALE | 60 | ANGINA | DRUG A | NONE | ... |
| 3 | FEMALE | 62 | HIGH BLOOD PRESSURE | DRUG A | ALLERGIC REACTION | ... |
| ... | ... | ... | ... | ... | .... | ... |

GENE DATABASE                                                        702

| PATIENT ID | GENE 1 | GENE 2 | ... |
|---|---|---|---|
| 1 | AA | AT | ... |
| 2 | AA | AA | ... |
| 3 | TT | AA | ... |
| ... | ... | ... | ... |

# FIG.8

201

**PATTERN EXTRACTION UNIT**

803

| LOCAL FREQUENT PATTERN INFORMATION | SUPPORT COUNT |
|---|---|
| (DISEASE NAME=HIGH BLOO PRESSURE), (PRESCRIBED DRUG=A) | 5 |
| (DISEASE NAME=HIGH BLOO PRESSURE), (PRESCRIBED DRUG=A), (EFFECT=INSUFFI-CIENT REDUCTION IN PRESSURE) | 4 |
| ... | ... |

| LOCAL FREQUENT PATTERN INFORMATION | SUPPORT COUNT |
|---|---|
| (GENE1=AA) | 7 |
| (GENE1=AA),(GENE2=AT) | 5 |
| ... | ... |

804

202b

802

| LOCAL FREQUENT PATTERN INFORMATION | SUPPORT COUNT | ID LIST |
|---|---|---|
| (GENE1=AA) | 7 | 1,2,3,4,5,6,7 |
| (GENE1=AA),(GENE2=AT) | 5 | 1,3,4,6,7 |
| ... | ... | ... |

202a

| LOCAL FREQUENT PATTERN INFORMATION | SUPPORT COUNT | ID LIST |
|---|---|---|
| (DISEASE NAME=HIGH BLOOD PRESSURE), (PRESCRIBED DRUG=A) | 5 | 1,2,3,4,5 |
| (DISEASE NAME=HIGH BLOOD PRESSURE), (PRESCRIBED DRUG=A),(EFFECT=INSUFFI-CIENT REDUCTION IN PRESSURE) | 4 | 1,2,3,5 |
| ... | ... | ... |

801

# FIG.9

START

CREATE AN ITEM PATTERN BY COMBINING
LOCAL FREQUENT PATTERNS EXTRACTED
FROM ANY ONE OR MORE DATA ANALSIS UNITS

PARTIAL PATTERNS OF THE
CREATED PATTERN INCLUDED IN
THE RARE PATTERN LIST?

Yes

No

USE THE CREATED PATTERN AS A CANDIDATE PATTERN

END

# FIG.10

**PATTERN EXTRACTION UNIT** 201

- CANDIDATE PATTERN CREATING UNIT 211
- SUPPORT COUNT COUNTER UNIT 212
- SUPPORT COUNT UPPER-BOUND VALUE COUNTING UNIT 213
- MINIMUM SUPPORT COUNT 215
- PROCESSING UNIT POSITION INFORMATION
- LOCAL FREQUENT PATTERN INFORMATION
- FREQUENT PATTERN LIST
- RARE PATTERN LIST

205 **INPUT UNIT**

206 **OUTPUT UNIT**

1001 **TALLY DATA PROCESSING UNIT**
- COMMON ID COUNTER UNIT 222

204

**202a DATA PROCESSING UNIT** 221a
- FREQUENT PATTERN EXTRACTION UNIT
- MINIMUM SUPPORT COUNT 225a
- ID LIST
- PROCESSING UNIT POSITION INFORMATION

**202b DATA PROCESSING UNIT** 221b
- FREQUENT PATTERN EXTRACTION UNIT
- MINIMUM SUPPORT COUNT 225b
- ID LIST
- PROCESSING UNIT POSITION INFORMATION

**202m DATA PROCESSING UNIT** 221m
- FREQUENT PATTERN EXTRACTION UNIT
- MINIMUM SUPPORT COUNT 225m
- ID LIST
- PROCESSING UNIT POSITION INFORMATION

**203a DATA STORAGE UNIT**

| ID | A1 | A2 | ... |
|----|----|----|-----|
| X1 | | | |
| X2 | | | |
| ... | | | |

**203b DATA STORAGE UNIT**

| ID | B1 | B2 | ... |
|----|----|----|-----|
| X1 | | | |
| X2 | | | |
| ... | | | |

**203m DATA STORAGE UNIT**

| ID | M1 | M2 | ... |
|----|----|----|-----|
| X1 | | | |
| X2 | | | |
| ... | | | |

25

# FIG.11

240

| DATA PROCESSING UNIT | DATA PROCESSING UNIT | • • • | DATA PROCESSING UNIT |

202a  202b  202m

| DATA STORAGE UNIT | DATA STORAGE UNIT | DATA STORAGE UNIT |

203a  203b  203m

# FIG.12

| PATTERN EXTRACTION UNIT | ATTRIBUTE CONVERSION UNIT | • • • | ATTRIBUTE CONVERSION UNIT |

201  1201a  1201n

204

| DATA PROCESSING UNIT | DATA PROCESSING UNIT | • • • | DATA PROCESSING UNIT |

202a  202b  202m

| DATA STORAGE UNIT | DATA STORAGE UNIT | DATA STORAGE UNIT |

203a  203b  203m

# FIG.13

CASE DATABASE                                                  1301

| PATIENT ID | SEX | AGE | NAME OF DISEASE | PRESCRIBED DRUG | EFFECT | ... |
|---|---|---|---|---|---|---|
| 1 | MALE | 67 | HIGH BLOOD PRESSURE | DRUG A | INSUFFICIENT REDUCTION IN PRESSURE | ... |
| 2 | MALE | 60 | ANGINA | DRUG B | NONE | ... |
| 3 | FEMALE | 62 | HIGH BLOOD PRESSURE | DRUG A | ALLERGIC REACTION | ... |
| ... | ... | ... | ... | ... | ... | ... |

GENE DATABASE                              1302

| SPECIMEN ID | GENE 1 | GENE 2 | ... |
|---|---|---|---|
| a | AA | AT | ... |
| b | AA | AT | ... |
| c | TT | AT | ... |
| ... | ... | ... | ... |

# FIG.14

201

**PATTERN EXTRACTION UNIT**

| LOCAL FREQUENT PATTERN | SUPPORT COUNT |
|---|---|
| (DISEASE NAME=HIGH BLOOD PRESSURE), (PRESCRIBED DRUG=A) | 5 |
| (DISEASE NAME=HIGH BLOOD PRESSURE), (PRESCRIBEDDRUG=A),(EFFECT=INSUFFICIENT REDUCTION IN PRESSURE) | 4 |
| ... | ... |

1403

| LOCAL FREQUENT PATTERN | SUPPORT COUNT |
|---|---|
| (GENE 1=AA ) | 7 |
| (GENE 1=AA),(GENE 2=AT) | |
| ... | ... |

1404

1201

**ATTRIBUTE CONVERSION UNIT**

1405

| CASE DB | GENE DB |
|---|---|
| 1 | a |
| 2 | b |
| 3 | c |
| 4 | d |
| 5 | e |
| ... | ... |

202b

| LOCAL FREQUENT PATTERN | SUPPORT COUNT | ID LIST |
|---|---|---|
| (GENE 1=AA ) | 7 | a,b,c,d,e,f,g |
| (GENE 1=AA),(GENE 2=AT) | 5 | a,c,d,f,g |
| ... | ... | ... |

1402

202a

| LOCAL FREQUENT PATTERN | SUPPOT COUNT | ID LIST |
|---|---|---|
| (DISEASE NAME=HIGH BLOOD PRESSURE), (PRESCRIBED DRUG=A) | 5 | 1,2,3,4,5 |
| (DISEASE NAME=HIGH BLOOD PRESSURE), (PRESCRIBED DRUG=A), (EFFECT=INSUFFICIENT REDUCTION IN PRESSURE) | 4 | 1,2,3,5 |
| ... | ... | ... |

1401